# EUROPEAN PATENT SPECIFICATION

(11) **EP 3 689 996 B1**
(45) Date of publication and mention of the grant of the patent: **09.08.2023**
(21) Application number: 19218294.7
(22) Date of filing: 19.12.2019
(51) Int. Cl.: C09J 201/10, C09J 143/04, C09J 171/12

(54) **HIGH STRENGTH AND ELONGATION, LABEL FREE, SILYL MODIFIED POLYMER ADHESIVE COMPOSITION**
MARKIERUNGSFREIE KLEBSTOFFZUSAMMENSETZUNG BASIEREND AUF SILYLMODIFIZIERTES POLYMER MIT HOHER ZUGFESTIGKEIT UND DEHNUNG
COMPOSITION ADHÉSIVE SANS MARQUEUR À BASE DE POLYMÈRE MODIFIÉ PAR UN SILYLE DE HAUTE RÉSISTANCE ET ALLONGEMENT

(30) Priority: 01.02.2019 NL 2022496
(43) Date of publication of application: 05.08.2020
(73) Proprietor: Strongbond B.V., 7091 CM Dinxperlo (NL)
(72) Inventor: DE BLOCK , Rudolph Frank, 7091 CM Dinxperlo (NL); CONCEIÇÃO ALVES, Filipa Cristina, 7091 CM Dinxperlo (NL)
(74) Representative: Patent Business B.V.

(56) References cited:
- EP-A1- 2 857 436
- US-A- 3 971 751
- DATABASE WPI Week 201245 Thomson Scientific, London, GB; AN 2012-E18255 XP002794612, & CN 102 391 820 A (ZIBO HITECMEN CHEM CO LTD) 28 March 2012 (2012-03-28)
- DATABASE WPI Week 201561 Thomson Scientific, London, GB; AN 2015-44029J XP002794613, & CN 104 629 666 A (GUANGDONG XINZHAN CHEM NEW MATERIAL CO) 20 May 2015 (2015-05-20)

## Description

### FIELD OF THE INVENTION

The present invention relates to silyl modified polyether-based, label-free, one or two component, moisture curable adhesive and sealant compositions entailing high strength and high elongation. These are particularly advantageous in the vehicle construction industry, for instances, in the bonding and sealing of windscreens. The adhesive may also be used in applications such as in building and construction, industry, solar energy, marine, waterproofing, and so on.

### BACKGROUND OF THE INVENTION

Label free indicates that the label of the adhesives is free of Hazard and Precautionary phrases (H- and P-phrases) and of safety symbols and relates to European Regulation (EC) No 1272/2008 of the European Parliament and of the Council of 16 December 2008 on classification, labelling and packaging of substances and mixtures, amending and repealing Directives 67/548/EEC and 1999/45/EC, and amending Regulation (EC) No 1907/2006. The present adhesives referred to are intended to qualify as such. These are typically free from isocyanates, as the isocyanates are considered to cause problems, such as mentioned in "Registry of restriction intentions on Diisocyanates by the ECHA (European Chemical Agency)".

Silyl modified polymers (SMPs), also known as modified-silyl (MS) polymers, refer to a class of polymers functionalized with silicon-containing reactive groups, respectively alkoxysilyl groups such as methoxysilyl and ethoxysilyl. Silyl modified polymers may consist of different building blocks, or in other words comprise different polymer backbones. In the presence of suit-able catalysts and atmospheric humidity alkoxysilyl functions are easily hydrolyzed at room temperature. Hydrolysis encompasses the elimination of the alkoxy function in the form of an alcohol and the formation of silanol-functional polymer chains. These subsequently condense with one another upon the elimination of water to form an elastic network. When the multiplicity of alkoxysilane functions per polymer chain is superior to 2, cross-linked polymer network structures may be obtained upon curing. This room temperature, moisture curing ability has rendered silyl modified polymers very useful for the production of one or two component adhesives and sealants across many industries.

Silyl modified polymer-based adhesives and sealants are usually label-free according to the above definition and thus user-safer when compared with traditional moisture curable polyurethanes. On the other hand, they also exhibit substantial lower (tensile) strengths.

Many applications in the field of vehicle construction such as window bonding demand the utilization of flexible adhesives with yet high strength. For instances, EP 1256595A1 states that to meet the requirements of the automotive industry a flexible adhesive composition, e.g. based on silane terminated polyurethane shall exhibit a breaking elongation superior to 250% and a tensile strength superior to 4.5 MPa. Despite few commercial implementations based on one component moisture curable silane terminated polyurethanes, such requirements are mostly satisfied by one component, room temperature, moisture curable polyurethane-based adhesives. However, isocyanates and particularly di-isocyanates, as used as solution in EP 1256595 A1, are increasingly stringently regulated (see e.g. 'Registry of restriction intentions' of the ECHA (European Chemical Agency)). Consequently, a shift toward isocyanate-free adhesives and sealants is crucial.

The present invention may make use of a specific group of silyl modified polymers, such as described in U.S. Pat. No. 3,971,751 and for example known as Kaneka's MS Polymer^{™}. With respect to polymer backbone these comprise polyether and/or blends thereof with poly (meth) acrylate in the absence of urethane or urea linkages and thus any residual isocyanate. This makes MS Polymer^{™}-based products unique and beneficial. A broad range of MS Polymer^{™} grades are available. These may differentiate in degree of functionalization (number and nature of groups attached to the backbone) and backbone structure in a wide viscosity range.

Incidentally EP 2 857 436 A1 recites a polymer (A) having, at one terminal moiety thereof, a terminal structure having two or more carbon-carbon unsaturated bonds. A reactive-silicon-group-containing polymer (B) having, at one terminal moiety thereof, a terminal structure having two or more reactive silicon groups. These polymers may be used for adhesives.

Flexible sealant and adhesive products manufactured with MS polymer^{™} have some good characteristics, such as adhesion on a wide range of substrate materials, and good temperature and UV resistance. However, due to their inherent flexible polyether backbone attainable tensile properties with MS polymer^{™}-based systems are usually inferior to those achievable with polyurethane-based systems.

It is therefore an object of the present invention to provide a modified silyl polymer-based adhesive and sealant with an improved tensile strength while maintaining a high elongation, without jeopardizing the further functionality and advantages.

### SUMMARY OF THE INVENTION

The present invention relates to a high tensile strength, a high green strength, and a high elongation at break adhesive, which comprises a large fraction of modified silyl polymer according to claim 1, and a method according to claim 15. Using the present high amount of silyl modified polymer in combination with carbon black an unexpected and not fully appreciated improved balance between high tensile strength and high elongation, as well as high green strength, is achieved.

The main component of the adhesive is a modified silyl polymer. This polymer is present in a relatively high amount of 40-75 wt.%, based on a total weight of the adhesive. These levels are higher than often applied in, in this respect, comparable adhesives. The silyl modified polymer consists of a reactive-silicon-group-containing polymer SM₂ in which a main chain skeleton is a polyoxyalkylene polymer, and a (meth)acrylate polymer SM₃ having one or more reactive silicon groups, wherein the polymer SM₂ has at one terminal moiety thereof a terminal structure having two or more reactive silicon groups, and having reactive silicon groups which are 1.1 or more in number on average per terminal of the polymer. As a further component a filler is used in an amount of 10-50 wt.%. The filler comprises a large fraction of at least one compound which functions as a strengthener and reinforcer for the to be applied adhesive. It has been found that so-called highly structured carbon black, preferably a hard-type high structure carbon black, functions particularly well in this respect. It is added in an amount of 5-40wt.%. Some components, such as a plasticizer, isocyanate, polyurethane, such as a reactive polyurethane, are preferably not present. Further additives may be added in an amount of 0-20 wt.%. Further additives may be at least one of a polyamide thickener, such as 1-7 wt.%, e.g. 3-5 wt.%, typically used to achieve the high green strength, 0.1-2 wt.% of a co-catalyst, 0.1-2 wt.% of an adhesion promotor, such as 3-Aminopropyl-triethoxysilane (having both co-catalytic and adhesion promoting function, in an amount of 0.1-2 wt.%, preferably 0.5-1,8 wt.%, such as 1-1.5 wt.%), 0.05-2 wt.% of a catalyst, such as a tin catalyst, such as dioctyl tin-oxide, and 0.1-2 wt.% of a stabilizers, such as antioxidants, HALS and UV absorbers. Water is typically not added, but may (inevitably) be present in small amounts, such as 0-0.1 wt.%, preferably 0.0-0.01 wt.%, such as 0.001-0.01 wt.%. In case of a two-component adhesive water may be present such as in a part not containing a combination of modified silyl polymer and curing catalyst. To minimize the water content a drying agent may be added, such as 0.1-8 wt.% drying agent, preferably 0.5-7 wt.% drying agent, more preferably 1-5 wt.% drying agent. It is noted that a water absorbent material is considered to relate to a material absorbing water, which is a physical process, whereas the present drying agent reacts with water, which is a chemical process.

In a second aspect the present invention relates to a method of applying an adhesive according to the invention, comprising providing the adhesive, applying the adhesive to a joint or seal, sealing or bonding two elements together, wherein the seal or joint has a tensile strength of > 3 MPa (tensile strength of an adhesive at a given amount of elongation, as may be determined by ISO 47, typically > 6MPa, such as > 7.5 MPa, an elongation at break E_{ab} of > 100%, typically > 200%, such as > 300%, and often > 350%, and a high green strength.

Thereby the present invention provides a solution to one or more of the above-mentioned problems.

Advantages of the present description are detailed throughout the description.

### DETAILED DESCRIPTION OF THE INVENTION

The present invention relates in a first aspect to an adhesive according to claim 1.

In the present adhesive the polymer SM₂ is obtained by introducing one or more reactive silicon groups into unsaturated bonds of the polymer SM₁ by a hydrosilylation reaction, wherein polymer SM₁ has at one terminal moiety thereof, a terminal structure having two or more carbon-carbon unsaturated bonds, wherein the terminal moiety has a structure represented by the following general formula (1): 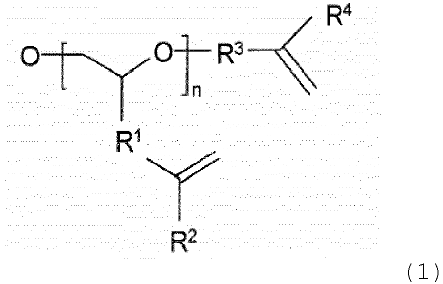 wherein R¹ and R³ are each independently a bivalent bonding group having 1 to 6 carbon atoms and an atom of the bonding group that is bonded to any carbon atom adjacent to the bonding group is any one of carbon, oxygen and nitrogen; R² and R⁴ are each independently hydrogen, or a hydrocarbon group having 1 to 10 carbon atoms; and n is an integer of 1 to 10.

In an exemplary embodiment of the present adhesive a hydroxyl group or hydroxyl groups contained in the (meth)acrylate polymer SM₃ are 0.3 or less in number on average per molecule of the polymer SM₁.

In an exemplary embodiment of the present adhesive the reactive silicon group(s) of the polymer SM₃ is/are (each) a reactive silicon group (rsg) represented by the following general formula (2) :

-SiR⁵₃₋ₐYₐ (2)

wherein R⁵ (s) is/are (each independently) a substituted or unsubstituted hydrocarbon group having 1 to 20 carbon atoms, Y is/are (each) a hydroxyl group or a hydrolyzable group, and a is any one of 1, 2 and 3.

In an exemplary embodiment of the present adhesive the polymer SM₂ is a polyoxyalkylene polymer having both species of one or more reactive silicon groups (rsg₂) which is/are (each) represented by the general formula (2) in which a is 2, and one or more reactive silicon groups (rsg₃) which is/are (each) represented by the general formula (2) in which a is 3; and/or a polyoxyalkylene polymer having the reactive silicon group (s) (rsg₂) and a polyoxyalkylene polymer having the reactive silicon group(s) (rsg₃), preferably wherein the reactive silicon group(s) (rsg₂) is/are (each) a methyldimethoxysilyl group, and the reactive silicon group(s) (rsg₃) is/are (each) a trimethoxysilyl group, and R⁵ is methyl or ethyl.

In an exemplary embodiment of the present adhesive the polymer SM₂ has trimethoxysilyl groups which are 1.27 or more in number on average per molecule of the polymer SM₂.

In an exemplary embodiment of the present adhesive the polymer SM₂ has a number-average molecular weight of 10000 or more and less than 35000.

The above SM polymers are found to very effective and provide the claimed advantages, in combination with the present carbon black. These polymers are subject of a patent application EP 2 857 436 A1, which contents are incorporated by reference into the present application.

In an exemplary embodiment of the present adhesive the carbon black may have has a particle diameter of between 10.0 and 50.0 nm, preferably 15-40 nm, more preferably 18-35, such as 20-30 nm, wherein the particle size is measured per ASTM D3849 procedure D, and an aggregate/agglomerate structure, measured in n-dibutyl Phthalate absorption number (DBPA), of between about 50 to about 175 cc/100g, preferably 45-150 cc/100g, more preferably 50-130 cc/100g, wherein the DBPA structure is measured by ASTM D2414. It has been found that relatively small particles function better in terms of strengthening and tensile strength and elongation. With the DBPA good strengthening and a robust dispersibility is obtained.

In an exemplary embodiment of the present adhesive the carbon black may have a surface are of >30 m²/g, preferably >50 m²/g, more preferably 75-400 m²/g, e.g. 80-150 m²/g (as determined with BET, such as according to ASTM D 6556).

In an exemplary embodiment of the present adhesive the adhesive may comprise 0.2-8 wt.% drying agent, preferably 0.5-7 wt.% drying agent, such as 3-5 wt.% drying agent.

In an exemplary embodiment of the present adhesive the drying agent may comprise vinyl trimethoxy silane, preferably 50-100 wt.% of the drying agent, such as 90-95 wt.% thereof.

In an exemplary embodiment of the present adhesive the highly structured carbon black may be selected from highly structured carbon blacks, such as reinforcing carbon blacks, tinting carbon blacks, High, Medium and Regular Furnace Black grades, Super Abrasion Furnace Blacks, Semi Super Abrasion Furnace Blacks, High Abrasion Furnace Blacks, such as N110, N115, N120, N121, N125, N134, N135, S212, N219, N220, N231, N234, N293, N299, S315, N326, N330 according to ASTM 1765-06, and combinations thereof. Examples of tinting blacks are Printex U, Printex 60, Printex 300, Printex 3, of Orion, and JY-6608P and JY-6607P of Hangzhou Juychem.

In an exemplary embodiment of the present adhesive the filler may be selected from chalk, precipitated chalk, coated precipitated chalk, silica, and combinations thereof. It preferably is a calcium carbonate-based composition.

In an exemplary embodiment of the present adhesive the additives may be selected from catalysts, co-catalysts, rheology control agents, pigments, pigment pastes, HALS, UV stabilizers, antioxidants, adhesion promotors, and combinations thereof.

In an exemplary embodiment of the present adhesive may comprise silyl modified polymer, filler, highly structured carbon black, and optionally additive, with the proviso that at least one of the groups consisting of isocyanate, polyurethane, and plasticizer, is not present, preferably all are not present.

In an exemplary embodiment of the present adhesive a (dynamic) viscosity is 20-50000 mPa*s(according to ISO 2555), preferably 100-40000 mPa*s, more preferably 500-35000 mPa*s. Exemplary viscosities of the present adhesives are approximately as follows: At 0.1 s-1 = ca. 35000 Pa.s; At 0.6 s-1 = ca. 6500 Pa.s; and at 1 s-1 = ca. 4500 Pa.s.

In an exemplary embodiment of the present adhesive the silyl modified polymer has an Mn> 10000, preferably > 20000 such as >25000 (Mn determined by GPC against a polystyrene standard). An exemplary SM polymer has an Mn of 30000. It has been found that especially these polymers provide the advantageous effects.

In an exemplary embodiment of the present adhesive the polymer may comprise a functionalized polyether backbone. The molecular weight average mass of the polymer may be from 2000-50000 Da.

In an exemplary embodiment of the present adhesive the polyether backbone may comprise methoxy silane terminal groups or ethoxy silane terminal groups, typically at all ends, each comprising 1-3 methoxy/ethoxy-groups, typically two or three methoxy/ethoxy-groups. A total number of terminal groups is typically 3-5, such as 4.

In an exemplary embodiment of the present adhesive the polymer may be blended with an additional poly(meth)acrylate, such as with 2-20 wt.%, relative to a total adhesive.

In an exemplary embodiment of the present adhesive the polymer may be selected from at least one of MS-polymers^{™}, dimethoxy silyl terminated polyether, trimethoxy silyl terminated polyether, S203H, S303H,S227, S327, SAX 220, SAX 260, SAX350, SAX400, SAT010, SAX015, SAX115, SAT145, MAX602, MAX923, MAX951, SAX750, SAX510, SAX520, SAX 530, SAX540, SAX580, SAX590, SAX 725, SAX750, MAX 451, MAX 480, MAX850; Evonik Polymer for example ST47, ST 48, ST 77, ST 61, ST 61 LV, ST 81, ST 80 and TEGOPAC^{®}, for example Seal 100, Bond 150, and Bond 250, preferably SAX 725 and SAX 750.

In an exemplary embodiment of the present adhesive the adhesive may be a 2-component or a one-component adhesive.

In an exemplary embodiment the present adhesive may comprise 45-70 wt.% of a silyl modified polymer, preferably 50 - 65 wt.% silyl modified polymer, more preferably 55 - 60 wt.% silyl modified polymer.

In an exemplary embodiment the present adhesive may comprise 15-40 wt.% of filler, not taking into account chalk, preferably 20-30 wt.% of filler. It may comprise 0-30 wt.% chalk, preferably 5-20 wt.% chalk, such as 7-15 wt.% chalk.

In an exemplary embodiment the present adhesive may comprise 8-30 wt.% carbon black, preferably 10-25 wt.% carbon black, more preferably 13-20 wt.% such as 16-18 wt.%.

In an exemplary embodiment the present adhesive may comprise 1-18 wt.% additives, preferably 2-17 wt.% additives, more preferably 6-16 wt.% additives, even more preferably 10-15 wt.%.

In an exemplary embodiment of the present method one element may be a workpiece, such as a vehicle window, a vehicle panel, and a window, and the other element is a vehicle, such as a car, a bus, a train, and a caravan, or a building.

The invention is further detailed by the accompanying figures and examples, which are exemplary and explanatory of nature and are not limiting the scope of the invention. To the person skilled in the art it may be clear that many variants, being obvious or not, may be conceivable falling within the scope of protection, defined by the present claims.

### EXAMPLES/EXPERIMENTS

The experiments show results with a label-free adhesive which has simultaneously high (tensile) strength (typically >6MPa) and high flexibility (typically >250%). Such adhesives are relevant for bonding of windscreens in various vehicles, i.e. cars, buses, trains, caravans, etc. This is achieved by choosing a high strength and flexible label-free polymer. This belong to the class of silyl modified polymers. Examples of such polymers are given in table 1.

### Experiment 1: effect of polymer choice

This experiment shows the effect of the choice of a polymer according to the claims 1-5.

### Formulation

| Raw material/ Example | FA 001 | FA 002 | FA 003 | FA 004 |
|---|---|---|---|---|
| SAX 725 invention | 50 | | | |
| SAX 750 invention | | 50 | | |
| SAX 575 invention | | | 50 | |
| MS 303H prior art | | | | 50 |
| Mixed fillers, chalk | 42.7 | 42.7 | 42.7 | 42.7 |
| Mixed stabilizers | 0.5 | 0.5 | 0.5 | 0.5 |
| Drying agent | 2.8 | 2.8 | 2.8 | 2.8 |
| Dynasylan AMEO | 1.4 | 1.4 | 1.4 | 1.4 |
| Tin-catalyst | 0.6 | 0.6 | 0.6 | 0.6 |
| Mixed pigments | 2 | 2 | 2 | 2 |

### Results

| | Fmax (MPa) | Elongation at break (%) |
|---|---|---|
| FA 001 | 5.3 | 441 |
| FA 002 | 4.6 | 289 |
| FA 003 | 4.2 | 215 |
| FA 004 | 2.7 | 240 |

The results clearly show the superior behavior of the polymer of claims 1-5. It also shows that the required results cannot be obtained when using chalks as fillers.

### Example 2: effect of reinforcing filler

The following examples show the behavior of several reinforcing fillers on a standard formulation.

| Raw material/ Example | FA 004 | FA 005 | FA 006 | FA 007 |
|---|---|---|---|---|
| MS 303H prior art | 37.5 | 37.5 | 37.5 | 37.5 |
| MS 203H prior art | 12.5 | 12.5 | 12.5 | 12.5 |
| Precipitated Calcium Carbonate (PCC), coated | 42.7 | 20.7 | 15.8 | 0 |
| Reinforcing filler SILFIT Z91 | | 22 | 22 | 36.9 |
| Polyamide wax | 0 | 0 | 5.0 | 5.8 |
| Mixed stabilizers | 0.5 | 0.5 | 0.5 | 0.5 |
| Drying agent | 2.8 | 2.8 | 2.8 | 2.8 |
| Dynasylan AMEO | 1.4 | 1.4 | 1.4 | 1.4 |
| Tin-catalyst | 0.6 | 0.6 | 0.6 | 0.6 |
| Mixed pigments | 2 | 2 | 2 | 2 |

### Results

| | Fmax (MPa) | Elongation at break (%) |
|---|---|---|
| FA 004 | 4.6 | 280 |
| FA 005 | 6.1 | 190 |
| FA 006 | 4.7 | 200 |
| FA 007 | 5.3 | 160 |

Although Fmax improvements using reinforcing filler can be seen, the results are still far from the desired values. Especially elongation at break is actually decreased (compare examples 1 and 2) whereas an increase is desired. Similar results were obtained with several reinforcing fillers including Silbond FW 600 and Aktifit PF 111. Therefore, it can be concluded that reinforcing fillers alone are not capable of achieving the desired results.

### Example 3: effect of polymer and reinforcing filler

In example 3 the polymer of claims 1-5 are combined with the reinforcing fillers. Formulation:

| Raw material/ Example | FA 009 | FA 010 | FA 011 | FA 012 |
|---|---|---|---|---|
| SAX 725 invention | 50 | | | |
| SAX 750 invention | | 50 | | |
| SAX 575 invention | | | 50 | |
| MS 303H prior art | | | | 50 |
| PCC, coated | 15.8 | 15.8 | 15.8 | 15.8 |
| Reinforcing filler SILFIT Z91 | 22 | 22 | 22 | 22 |
| Polyamide wax | 5.8 | 5.8 | 5.8 | 5.8 |
| Mixed stabilizers | 0.5 | 0.5 | 0.5 | 0.5 |
| Drying agent | 2.8 | 2.8 | 2.8 | 2.8 |
| Dynasylan AMEO | 1.4 | 1.4 | 1.4 | 1.4 |
| Tin-catalyst | 0.6 | 0.6 | 0.6 | 0.6 |
| Mixed pigments | 2 | 2 | 2 | 2 |

### Results

| | Fmax (MPa) | Elongation at break (%) |
|---|---|---|
| FA 009 | 5.0 | 290 |
| FA 010 | 6.3 | 223 |
| FA 011 | 4.1 | 122 |
| FA 012 | 2.7 | 240 |

It can be shown that there are serious improvements but the desired result (Fmax > 6.0 and Elongation at break >250%) is still not obtained.

### Example 4: effect of polymer and carbon black

Example four shows the superior effect of using both the polymer and carbon black of the invention as in experiment FA 009 compared to FA 002 and FA 010. It also shows the requirement of using a specific carbon black of this invention. And, finally it shows that a conventional polymer in combination with the carbon black of claim does not lead to the required improvements.

| Raw material/ Example | FA 002 | FA 013 | FA 014 | FA 015 |
|---|---|---|---|---|
| SAX 750 invention | 50 | 50 | 50 | |
| MS303H prior art | | | | 37.5 |
| MS202H prior art | | | | 12.5 |
| PCC, coated | 42.7 | 18.5 | 18.5 | 18.5 |
| Carbon black according to claim 10 (Printex 300) | | 20 | | 20 |
| Special Black 100 | | | 20 | |
| Polyamide wax | 0 | 4.2 | 4.2 | 4.2 |
| Mixed stabilizers | 0.5 | 0.5 | 0.5 | 0.5 |
| Drying agent | 2.8 | 2.8 | 2.8 | 2.8 |
| Dynasylan AMEO | 1.4 | 1.4 | 1.4 | 1.4 |
| Tin-catalyst | 0.6 | 0.6 | 0.6 | 0.6 |
| Mixed pigments | 2 | 2 | 2 | 2 |

| | Fmax (MPa) | Elongation at break (%) |
|---|---|---|
| FA 002 | 4.6 | 289 |
| FA 013 | 7.0 | 360 |
| FA 014 | 5.1 | 227 |
| FA 015 | 5.4 | 140 |

The invention although described in detailed explanatory context may be best understood in conjunction with the accompanying examples.

## Claims

1. Workpiece adhesive comprising
40 - 75 wt.% of a silyl modified polymer, wherein the silyl modified polymer consists of a reactive-silicon-group-containing polymer SM₂ in which a main chain skeleton is a polyoxyalkylene polymer, and a (meth)acrylate polymer SM₃ having one or more reactive silicon groups,
wherein the polymer SM₂ has at one terminal moiety thereof a terminal structure having two or more reactive silicon groups, and having reactive silicon groups which are 1.1 or more in number on average per terminal of the polymer,
10 - 50 wt.% of filler,
5-40 wt.% of highly structured carbon black,
less than 0.1 wt.% water, preferably less than 0.01 wt.% water,
0.1-8 wt.% drying agent, and
0 - 20 wt.% additives,
wherein all wt.% are relative to a total weight of the adhesive, wherein the polymer SM₂ is obtained by introducing one or more reactive silicon groups into unsaturated bonds of the polymer SM₁ by a hydrosilylation reaction, wherein polymer SM₁ has at one terminal moiety thereof, a terminal structure having two or more carbon-carbon unsaturated bonds, wherein the terminal moiety has a structure represented by the following general formula (1): 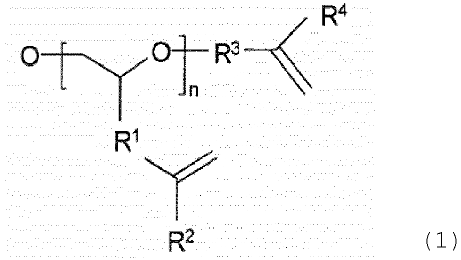
wherein R¹ and R³ are each independently a bivalent bonding group having 1 to 6 carbon atoms and an atom of the bonding group that is bonded to any carbon atom adjacent to the bonding group is any one of carbon, oxygen and nitrogen; R² and R⁴ are each independently hydrogen, or a hydrocarbon group having 1 to 10 carbon atoms; and n is an integer of 1 to 10.

2. Workpiece adhesive according to claim 1, wherein a hydroxyl group or hydroxyl groups contained in the (meth)acrylate polymer SM₃ are 0.3 or less in number on average per molecule of the polymer SM₁.

3. Workpiece adhesive according to any of claims 1-2, wherein
the reactive silicon group(s) of the polymer SM₃ is/are (each) a reactive silicon group (rsg) represented by the following general formula (2):
-SiR⁵₃₋ₐYₐ (2)
wherein R⁵ (s) is/are (each independently) a substituted or unsubstituted hydrocarbon group having 1 to 20 carbon atoms, Y is/are (each) a hydroxyl group or a hydrolyzable group, and a is any one of 1, 2 and 3.

4. Workpiece adhesive according to any of claims 1-3, wherein the polymer SM₂ is a polyoxyalkylene polymer having both species of one or more reactive silicon groups (rsg₂) which is/are (each) represented by the general formula (2) in which a is 2, and one or more reactive silicon groups (rsg₃) which is/are (each) represented by the general formula (2) in which a is 3; and/or a polyoxyalkylene polymer having the reactive silicon group (s) (rsg₂) and a polyoxyalkylene polymer having the reactive silicon group(s) (rsg₃),
preferably wherein the reactive silicon group(s) (rsg₂) is/are (each) a methyldimethoxysilyl group, and the reactive silicon group(s) (rsg₃) is/are (each) a trimethoxysilyl group, and R⁵ is methyl or ethyl.

5. Workpiece adhesive according to any of claims 1-4, wherein the polymer SM₂ has trimethoxysilyl groups which are 1.27 or more in number on average per molecule of the polymer SM₂.

6. Workpiece adhesive according to any of claims 1-5, wherein the polymer SM₂ has a number-average molecular weight of 10000 or more and less than 35000.

7. Workpiece adhesive according to any of claims 1-6, wherein highly structured carbon black has a particle size of between 10.0 and 50.0 nm, wherein the particle size is measured per ASTM D3849 procedure D, and an aggregate/agglomerate structure, measured in n-dibutyl Phthalate absorption number (DBPA), of between about 50 to about 175 cc/100g, wherein the DBPA structure is measured by ASTM D2414, and/or wherein the highly structured carbon black has a surface are of >30 m²/g, preferably >50 m²/g, more preferably 75-400 m²/g, such as 80-150 m²/g (ASTM D 6556).

8. Workpiece adhesive according to any of claims 1-7, wherein the adhesive comprises 0.2-8 wt.% drying agent, preferably 0.5-7 wt.% drying agent, such as 3-5 wt.% drying agent, and/or wherein the drying agent comprises vinyl trimethoxy silane.

9. Workpiece adhesive according to any of claims 1-8, wherein the highly structured carbon black is selected from reinforcing carbon blacks, tinting carbon blacks, High, Medium and Regular Furnace Black grades, Super Abrasion Furnace Blacks, Semi Super Abrasion Furnace Blacks, High Abrasion Furnace Blacks, such as N110, N115, N120, N121, N125, N134, N135, S212, N219, N220, N231, N234, N293, N299, S315, N326, N330 according to ASTM 1765-06, Printex U, Printex 60, Printex 300, Printex 3, JY-6608P, JY-6607P, and combinations thereof.

10. Workpiece adhesive according to any of claims 1-9, wherein the filler is selected from chalk, precipitated chalk, coated precipitated chalk, silica, and combinations thereof.

11. Workpiece adhesive according to any of claims 1-10, wherein the additives are selected from catalysts, co-catalysts, rheology control agents, pigments, pigment pastes, HALS, UV stabilizers, antioxidants, adhesion promotors, and combinations thereof.

12. Workpiece adhesive according to any of claims 1-11, with the proviso that at least one of the group consisting of isocyanate, polyurethane, and plasticizer, is not present, preferably all are not present, and/or
wherein a (dynamic) viscosity is 20-50000 mPa*s(according to ISO 2555), and/or
wherein the silyl modified polymer has an Mn> 10000, preferably > 20000, such as >25000 (Mn determined by GPC against a polystyrene standard),
preferably wherein the adhesive is a 2-component or a one-component adhesive.

13. Workpiece adhesive according to any of claims 1-12, comprising
48-65 wt.% of a silyl modified polymer, preferably 52 - 64 wt.% silyl modified polymer, more preferably 55 - 63 wt.% silyl modified polymer, and/or
15-40 wt.% of filler, preferably 20-30 wt.% of filler, such as 0-30 wt.% chalk, preferably 5-20 wt.% chalk, such as 7-15 wt.% chalk, and/or
10-30 wt.% highly structured carbon black, preferably 15-25 wt.% highly structured carbon black, more preferably 18-22 wt.% highly structured carbon black, and/or
0.5-12 wt.% additives, preferably 1-10 wt.% additives, more preferably 2-8 wt.% additives, even more preferably 3-7 wt.%, such as 4-6 wt.%.

14. Method of applying a workpiece adhesive according to any of claims 1-13, comprising
providing the adhesive,
applying the adhesive to a joint or seal,
sealing or bonding two elements together,
wherein the seal or joint has a tensile strength of > 3 MPa,
such as > 6 MPa, an elongation at break E_{ab} of > 100%, such as > 200%, and a high green strength, preferably wherein one element is a workpiece, such as a vehicle window, a vehicle panel, and a window, and the other element is a vehicle, such as a car, a bus, a train, and a caravan, or a building.

## Patentansprüche

1. Klebstoff für Werkstücke, umfassend
40 - 75 Gew.-% eines silylmodifizierten Polymers, wobei das silylmodifizierte Polymer aus einem reaktive Siliziumgruppen enthaltenden Polymer SM₂, bei dem ein Hauptkettengerüst ein Polyoxyalkylenpolymer ist, und einem (Meth)acrylatpolymer SM₃ mit einer oder mehreren reaktiven Siliziumgruppen, besteht,
wobei das Polymer SM2 an einer terminalen Einheit davon eine terminale Struktur mit zwei oder mehr reaktiven Siliciumgruppen aufweist, und mit reaktiven Siliciumgruppen, deren Anzahl im Durchschnitt 1,1 oder mehr pro Terminal des Polymers, beträgt,
10 - 50 Gew.-% Füllstoff,
5-40 Gew.-% hochstrukturierter Ruß,
weniger als 0,1 Gew.-% Wasser, vorzugsweise weniger als 0,01 Gew.-% Wasser,
0,1-8 Gew.-% Trocknungsmittel, und
0 - 20 Gew.-% Additive,
wobei sich alle Gew.-% auf das Gesamtgewicht des Klebstoffs beziehen,
wobei das Polymer SM2 durch Einführen einer oder mehrerer reaktiver Siliciumgruppen in ungesättigte Bindungen des Polymers SM₁ durch eine Hydrosilylierungsreaktion erhalten wird, wobei das Polymer SM₁ an einem endständigen Teil davon eine endständige Struktur mit zwei oder mehr ungesättigten Kohlenstoff-Kohlenstoff-Bindungen aufweist, wobei der endständige Teil eine durch die folgende Struktur aufweist: 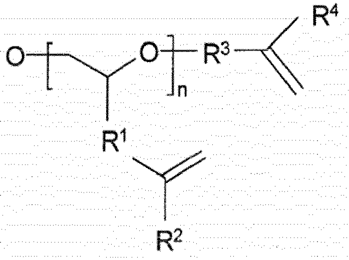 allgemeine Formel (1) dargestellte
wobei R¹ und R³ jeweils unabhängig voneinander eine bivalente Bindungsgruppe mit 1 bis 6 Kohlenstoffatomen sind und ein Atom der Bindungsgruppe, das an ein beliebiges, der Bindungsgruppe benachbartes Kohlenstoffatom gebunden ist, ein beliebiges aus Kohlenstoff, Sauerstoff und Stickstoff ist; R² und R⁴ jeweils unabhängig voneinander Wasserstoff oder eine Kohlenwasserstoffgruppe mit 1 bis 10 Kohlenstoffatomen sind; und n eine ganze Zahl von 1 bis 10 ist.

2. Werkstückklebstoff nach Anspruch 1, wobei eine Hydroxylgruppe oder Hydroxylgruppen, die in dem (Meth)acrylatpolymer SM3 enthalten sind, im Durchschnitt 0,3 oder weniger pro Molekül des Polymers SM₁ ausmachen.

3. Werkstückklebstoff nach einem der Ansprüche 1-2, wobei
die reaktive Siliciumgruppe(n) des Polymers SM₃ (jeweils) eine reaktive Siliciumgruppe(rsg) ist/sind, die durch die folgende allgemeine Formel (2) dargestellt wird:
-SiR⁵₃₋ₐYₐ (2)
worin R⁵ (s) (jeweils unabhängig voneinander) eine substituierte oder unsubstituierte Kohlenwasserstoffgruppe mit 1 bis 20 Kohlenstoffatomen ist/sind, Y (jeweils) eine Hydroxylgruppe oder eine hydrolysierbare Gruppe ist/sind und a eine der 1, 2 und 3 ist.

4. Werkstückklebstoff nach einem der Ansprüche 1 bis 3, wobei das Polymer SM₂ ein Polyoxyalkylenpolymer mit den beiden Spezies einer oder mehrerer reaktiver Siliciumgruppen (rsg2), die (jeweils) durch die allgemeine Formel (2) dargestellt sind, in der a 2 ist, und einer oder mehrerer reaktiver Siliciumgruppen (rsg3), die (jeweils) durch die allgemeine Formel (2) dargestellt sind, in der a 3 ist, ist und/oder ein Polyoxyalkylenpolymer mit der (den) reaktiven Siliciumgruppe(n) (rsg2) und ein Polyoxyalkylenpolymer mit der (den) reaktiven Siliciumgruppe(n) (rsg3),
wobei die reaktive(n) Siliciumgruppe(n) (rsg2) vorzugsweise (jeweils) eine Methyldimethoxysilylgruppe ist/sind und die reaktive(n) Siliciumgruppe(n) (rsg3) (jeweils) eine Trimethoxysilylgruppe ist/sind, und R⁵ Methyl oder Ethyl ist.

5. Werkstückklebstoff nach einem der Ansprüche 1-4, wobei das Polymer SM₂ Trimethoxysilylgruppen aufweist, deren Anzahl im Durchschnitt 1,27 oder mehr pro Molekül des Polymers SM₂ beträgt.

6. Werkstückklebstoff nach einem der Ansprüche 1-5, wobei das Polymer SM₂ ein zahlenmittleres Molekulargewicht von 10000 oder mehr und weniger als 35000 aufweist.

7. Werkstückklebstoff nach einem der Ansprüche 1-6, wobei der hochstrukturierte Ruß eine Teilchengröße zwischen 10,0 und 50,0 nm, wobei die Teilchengröße nach ASTM D3849 Verfahren D gemessen wird, und eine Aggregat/Agglomerat-Struktur aufweist, gemessen als n-Dibutylphthalat-Absorptionszahl (DBPA), von etwa 50 bis etwa 175 cm³/l00g aufweist, wobei die DBPA-Struktur nach ASTM D2414 gemessen wird, und/oder wobei der hochstrukturierte Ruß eine Oberfläche von >30 m²/g, vorzugsweise >50 m²/g, besonders bevorzugt 75-400 m²/g, wie 80-150 m²/g (ASTM D 6556).

8. Werkstückklebstoff nach einem der Ansprüche 1-7, wobei der Klebstoff 0,2 bis 8 Gew.-% Trocknungsmittel, vorzugsweise 0,5 bis 7 Gew.-% Trocknungsmittel, wie 3 bis 5 Gew.-% Trocknungsmittel, enthält, und/oder wobei das Trocknungsmittel Vinyltrimethoxysilan enthält.

9. Werkstückklebstoff nach einem der Ansprüche 1-8, wobei der hochstrukturierte Ruß ausgewählt ist aus Verstärkungsrußen, Abtönungsrußen, hohen, mittleren und normalen Furnace-Black-Sorten, Super Abrasion Furnace Blacks, Semi Super Abrasion Furnace Blacks, High Abrasion Furnace Blacks, wie N110, N115, N120, N121, N125, N134, N135, S212, N219, N220, N231, N234, N293, N299, S315, N326, N330 gemäß ASTM 1765-06, Printex U, Printex 60, Printex 300, Printex 3, JY-6608P, JY-6607P, und Kombinationen davon.

10. Werkstückklebstoff nach einem der Ansprüche 1-9, wobei der Füllstoff ausgewählt ist aus Kreide, gefällter Kreide, beschichteter gefällter Kreide, Kieselsäure, und Kombinationen davon.

11. Werkstückklebstoff nach einem der Ansprüche 1-10, wobei die Additive aus Katalysatoren, CoKatalysatoren, Rheologiekontrollmitteln, Pigmenten, Pigmentpasten, HALS, UV-Stabilisatoren, Antioxidantien, Haftvermittlern, und Kombinationen davon, ausgewählt sind.

12. Werkstückklebstoff nach einem der Ansprüche 1-11, mit der Maßgabe, dass mindestens einer aus der Gruppe bestehend aus Isocyanat, Polyurethan, und Weichmacher nicht vorhanden ist, vorzugsweise alle nicht vorhanden sind, und/oder
wobei eine (dynamische) Viskosität 20-50000 mPa*s (gemäß ISO 2555) beträgt, und/oder
wobei das silylmodifizierte Polymer ein Mn > 10000, vorzugsweise > 20000, wie z.B. >25000 (Mn bestimmt durch GPC gegen einen Polystyrolstandard) aufweist,
wobei der Klebstoff vorzugsweise ein 2-Komponenten- oder ein Ein-Komponenten-Klebstoff ist.

13. Werkstückklebstoff nach einem der Ansprüche 1-12, umfassend
48-65 Gew.-% eines silylmodifizierten Polymers, vorzugsweise 52-64 Gew.-% silylmodifiziertes Polymer, besonders bevorzugt 55-63 Gew.-% silylmodifiziertes Polymer, und/oder
15-40 Gew.-% eines Füllstoffs, vorzugsweise 20-30 Gew.-% eines Füllstoffs, wie 0-30 Gew.-% Kreide, vorzugsweise 5-20 Gew.-% Kreide, wie 7-15 Gew.-% Kreide, und/oder
10-30 Gew.-% hochstrukturierter Ruß, vorzugsweise 15-25 Gew.-% hochstrukturierter Ruß, besonders bevorzugt 18-22 Gew.-% hochstrukturierter Ruß, und/oder
0,5-12 Gew.-% Zusatzstoffe, vorzugsweise 1-10 Gew.-% Zusatzstoffe, besonders bevorzugt 2-8 Gew.-% Zusatzstoffe, noch bevorzugter 3-7 Gew.-%, wie z.B. 4-6 Gew.-%.

14. Verfahren zum Auftragen eines Werkstückklebstoffs nach einem der Ansprüche 1-13, umfassend Bereitstellen des Klebstoffs,
Auftragen des Klebstoffs auf eine Fuge oder Dichtung,
Abdichten oder Verbinden zweier Elemente miteinander,
wobei die Dichtung oder Verbindung eine Zugfestigkeit von > 3 MPa, z. B. > 6 MPa, eine Bruchdehnung E_{ab} von > 100 %, z. B. > 200 %, und eine hohe Grünfestigkeit, aufweist, vorzugsweise wobei ein Element ein Werkstück, z. B. ein Fahrzeugfenster, eine Fahrzeugplatte und ein Fenster, und das andere Element ein Fahrzeug, z. B. ein Auto, ein Bus, ein Zug und ein Wohnwagen, oder ein Gebäude, ist.

## Revendications

1. Adhésif pour pièces à usiner comprenant
40 - 75 % en poids d'un polymère modifié silyle, dans lequel le polymère modifié silyle se compose d'un polymère SM₂ contenant des groupes de silicium réactifs, dont le squelette de la chaîne principale est un polymère poly-oxyalkylène, et d'un polymère (méth)acrylate SM₃ ayant un ou plusieurs groupes de silicium réactifs,
dans lequel le polymère SM₂ possède, sur une de ses parties terminales, une structure terminale comportant deux groupes de silicium réactifs ou plus, et dont les groupes de silicium réactifs sont en nombre moyen de 1,1 ou plus par partie terminale du polymère,
10 - 50 % en poids de charge,
5-40 % en poids de noir de carbone hautement structuré,
moins de 0,1 % en poids d'eau, de préférence moins de 0,01 % en poids d'eau,
0,1-8 % en poids d'agent de séchage, et
0 - 20 % en poids d'additifs,
dans lequel tous les % en poids sont relatifs au poids total de l'adhésif,
dans lequel le polymère SM₂ est obtenu en introduisant un ou plusieurs groupes réactifs de silicium dans des liaisons non saturées du polymère SM₁ par une réaction d'hydrosilylation, dans lequel le polymère SM₁ a à l'une de ses parties terminales, une structure terminale ayant deux liaisons insaturées carbone-carbone ou plus, dans lequel la partie terminale a une structure représentée par la formule générale suivante (1) : 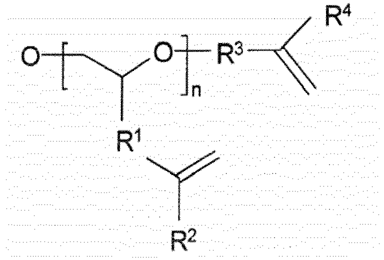
dans lequel R¹ et R³ sont chacun indépendamment un groupe de liaison bivalent ayant 1 à 6 atomes de carbone et un atome du groupe de liaison qui est lié à tout atome de carbone adjacent au groupe de liaison est l'un quelconque du carbone, de l'oxygène et de l'azote ; R² et R⁴ sont chacun indépendamment de l'hydrogène, ou un groupe d'hydrocarbures ayant 1 à 10 atomes de carbone ; et n est un nombre entier de 1 à 10.

2. Adhésif pour pièces selon la revendication 1, dans lequel un ou plusieurs groupes hydroxyles contenus dans le polymère (méth)acrylate SM₃ sont en nombre inférieur ou égal à 0,3 en moyenne par molécule du polymère SM₁.

3. Adhésif pour pièces à usiner selon l'une des revendications 1-2, dans lequel
le(s) groupe(s) silicium réactif(s) du polymère SM₃ est/sont un(des) groupe(s) silicium réactif(s) (rsg) représenté(s) par la formule générale suivante (2) :
-SiR⁵₃₋ₐYₐ (2)
dans laquelle R⁵ (s) est/sont (chacune indépendamment) un groupe hydrocarboné substitué ou non substitué ayant de 1 à 20 atomes de carbone, Y est/sont (chacune) un groupe hydroxyle ou un groupe hydrolysable, et a est l'une quelconque des valeurs 1, 2 et 3.

4. Adhésif pour pièces selon l'une des revendications 1-3, dans lequel le polymère SM₂ est un polymère polyoxyalkylène ayant les deux espèces d'un ou plusieurs groupes silicium réactifs (rsg2) qui sont (chacun) représentés par la formule générale (2) dans laquelle a est 2, et un ou plusieurs groupes silicium réactifs (rsg3) qui sont (chacun) représentés par la formule générale (2) dans laquelle a est 3 ; et/ou un polymère polyoxyalkylène ayant le(s) groupe(s) silicium réactif(s) (rsg2) et un polymer polyoxyalkylène ayant le(s) groupe(s) silicium réactif(s) (rsg3),
de préférence dans lequel le(s) groupe(s) silicium réactif(s) (rsg2) est/sont un groupe méthyl-diméthoxysilyle, et le(s) groupe(s) silicium réactif(s) (rsg3) est/sont un groupe triméthoxysilyle, et R⁵ est le méthyle ou l'éthyle.

5. Adhésif pour pièces selon l'une quelconque des revendications 1-4, dans lequel le polymère SM₂ possède des groupes triméthox-ysilyle dont le nombre moyen par molécule de polymère SM₂ est supérieur ou égal à 1,27.

6. Adhésif pour pièces selon l'une des revendications 1-5, dans lequel le polymère SM₂ a un poids moléculaire moyen en nombre de 10000 ou plus et inférieur à 35000.

7. Adhésif pour pièces selon l'une des revendications 1-6, dans lequel le noir de carbone hautement structuré a une taille de particule comprise entre 10,0 et 50,0 nm, la taille des particules étant mesurée selon la procédure D de l'ASTM D3849, et une structure d'agrégat/agglomérat, mesurée en indice d'absorption du phtalate de n-dibutyle (DBPA), comprise entre environ 50 et environ 175 cc/l00g, la structure DBPA étant mesurée selon l'ASTM D2414, et/ou dans laquelle le noir de carbone hautement structuré a une superficie de >30 m²/g, de préférence >50 m²/g, plus préférentiellement 75-400 m²/g, par exemple 80-150 m²/g (ASTM D 6556)

8. Adhésif pour pièces à usiner selon l'une des revendications 1-7, dans lequel l'adhésif comprend 0,2 à 8 % en poids d'agent de séchage, de préférence 0,5 à 7 % en poids d'agent de séchage, par exemple 3 à 5 % en poids d'agent de séchage, et/ou dans lequel l'agent de séchage comprend du vinyl-triméthoxy-silane.

9. Adhésif pour pièce à usiner selon l'une des revendications 1-8, dans lequel le noir de carbone hautement structuré est choisi parmi les noirs de carbone renforçants, les noirs de carbone colorants, les noirs de four de qualité élevée, moyenne et ordinaire, les noirs de four de super-abrasion, les noirs de four de semi-super-abrasion, Noirs de four à haute abrasion, tels que N110, N115, N120, N121, N125, N134, N135, S212, N219, N220, N231, N234, N293, N299, S315, N326, N330 selon ASTM 1765-06, Printex U, Printex 60, Printex 300, Printex 3, JY-6608P, JY-6607P, et des combinaisons de ceux-ci.

10. Adhésif pour pièce à usiner selon l'une des revendications 1-9, dans lequel la charge est choisie parmi la craie, la craie précipitée, la craie précipitée enrobée, la silice et des combinaisons de celles-ci.

11. Adhésif pour pièces à usiner selon l'une des revendications 1-10, dans lequel les additifs sont choisis parmi les catalyseurs, les co-catalyseurs, les agents de contrôle de la rhéologie, les pigments, les pâtes pigmentaires, les HALS, les stabilisateurs UV, les antioxydants, les promoteurs d'adhésion, et des combinaisons de ceux-ci.

12. Adhésif pour pièces à usiner selon l'une des revendications 1-11, à condition qu'au moins l'un des groupes constitués par l'isocyanate, le polyuréthane, et le plastifiant ne soit pas présent, de préférence qu'ils ne soient pas tous présents, et/ou
dans lequel la viscosité (dynamique) est comprise entre 20 et 50000 mPa*s (selon la norme ISO 2555), et/ou
dans lequel le polymère modifié silyle a un Mn > 10000, de préférence > 20000, par exemple > 25000 (Mn déterminé par GPC par rapport à un standard de polystyrène),
de préférence, dans lequel l'adhésif est un adhésif à deux composants ou à un composant.

13. Adhésif pour pièce à usiner selon l'une des revendications 1-12, comprenant
48-65 % en poids d'un polymère modifié silyle, de préférence 52-64 % en poids d'un polymère modifié silyle, plus préférentiellement 55-63 % en poids d'un polymère modifié silyle, et/ou
15-40 % en poids de charge, de préférence 20-30 % en poids de charge, telle que 0-30 % en poids de craie, de préférence 5-20 % en poids de craie, telle que 7-15 % en poids de craie, et/ou
10-30 % en poids de noir de carbone hautement structuré, de préférence 15-25 % en poids de noir de carbone hautement structuré, plus préférentiellement 18-22 % en poids de noir de carbone hautement structuré, et/ou
0,5-12 % en poids d'additifs, de préférence 1-10 % en poids d'additifs, de préférence 2-8 % en poids d'additifs, de préférence encore 3-7 % en poids, par exemple 4-6 % en poids.

14. Méthode d'application d'un adhésif sur une pièce à usiner selon l'une des revendications 1-13, comprenant
fournir l'adhésif
appliquer l'adhésif sur un joint ou une étanchéité,
sceller ou coller deux éléments ensemble,
dans lequel le joint ou la jonction a une résistance à la traction de > 3 MPa, par exemple > 6 MPa, un allongement à la rupture E_{ab} de > 100 %, par exemple > 200 %, et une forte résistance au vert, de préférence dans lequel un élément est une pièce à usiner, par exemple une fenêtre de véhicule, un panneau de véhicule et une fenêtre, et l'autre élément est un véhicule, par exemple une voiture, un bus, un train et une caravane, ou un bâtiment.
